# EUROPÄISCHE PATENTANMELDUNG

(11) **EP 3 432 014 A1**
(43) Veröffentlichungstag der Anmeldung: **23.01.2019**
(21) Anmeldenummer: 17182034.3
(22) Anmeldetag: 19.07.2017
(51) Int. Cl.: G01R 31/28, G01R 31/317, G06F 11/00

(54) **VERFAHREN UND SYSTEM ZUR PRÄDIKTIVEN WARTUNG VON INTEGRIERTEN SCHALTUNGEN**

(71) Anmelder: Siemens Aktiengesellschaft, 80333 München (DE)
(72) Erfinder: Matschnig, Martin, 3430 Tulln (AT); Eppensteiner, Friedrich, 3620 Spitz (AT); Fischer, Bernhard, 1120 Wien (AT); Ghameshlu, Majid, 1110 Wien (AT); Hinterstoisser, Thomas, 2102 Bisamberg (AT); Taucher, Herbert, 2340 Mödling (AT)
(74) Vertreter: Maier, Daniel Oliver

(57) **Zusammenfassung**

Die Erfindung betrifft ein Verfahren zur prädiktiven Wartung von elektronischen Bauelementen (BE) sowie ein zugehöriges System. Die zu wartenden elektronischen Bauelemente (BE) sind als integrierte Schaltungen, insbesondere als anwendungsspezifische, integrierte Schaltungen (ASICs) oder als so genannte Field Programmable Gate Arrays (FPGAs), ausgeführt. Ein zu wartendes, elektronisches Bauelement (BE) weist dazu an zumindest einer Position (P1, P2) Sensoren (T1, U1, LZ1, T2, U2, LZ2) auf, von welchen während eines laufenden Betriebs aktuelle Werte von Systemparametern wie z.B. Temperatur und Spannung sowie von einer Signallaufzeit an der zumindest einen Position (P1, P2) ermittelt werden. Die aktuell von den Sensoren (T1, U1, LZ1, T2, U2, LZ2) an der zumindest einen Position (P1, P2) ermitteln Werte der Systemparameter und der Signallaufzeit werden von einer im elektronischen Bauelement (BE) angebrachten zentralen Überwachungseinheit (UW) abgefragt (1). Von der zentralen Überwachungseinheit (UW) wird dann anhand der aktuell ermittelten Werte der Systemparameter ein jeweils gültiger Grenzwert für die Signallaufzeit an der zumindest einen Position (P1, P2) ermittelt und die aktuell ermittelte Signallaufzeit an dieser zumindest einen Position (P1, P2) mit dem jeweils gültigen Grenzwert verglichen (2). Übersteigt die aktuelle Signallaufzeit diesen Grenzwert, so wird eine Meldung an eine übergeordnete Ebene (GS) wie z.B. das Gesamtsystem gesendet (3), um beispielsweise einen frühzeitigen Austausch des elektronischen Bauelements (BE) zu veranlassen und damit Fehlerzustände und Ausfälle zu verhindern.

## Beschreibung

### Technisches Gebiet

Die vorliegende Erfindung betrifft allgemein das Gebiet der elektronischen Systeme und Schaltungen, insbesondere integrierte Schaltungen wie z.B. anwendungsspezifische, integrierte Schaltungen (ASICs) und Field Programmable Gate Arrays (FPGAs). Im Speziellen bezieht sich die vorliegende Erfindung auf ein Verfahren zur prädiktiven Wartung eines elektronischen Bauelements, welches als integrierte Schaltung, insbesondere als ASIC oder FPGA ausgeführt ist. Dieses elektronische Bauelement weist an zumindest einer Position Sensoren auf, von welchen während eines Betriebs des elektronischen Bauelements Systemparameter und eine Signallaufzeit an der zumindest einen Position ermittelt werden. Weiterhin betrifft die vorliegende Erfindung auch ein zugehöriges System zur prädiktiven Wartung eines elektronischen Bauelements.

### Stand der Technik

Bei vielen komplexen Systemen wie z.B. Steuerungs- und Regelsystemen für Maschinen und Anlagen, Computersystemen, Produktionsanlagen, Fahrzeugen und Flugzeugen, Triebwerken, etc. ist insbesondere bei sicherheitskritischen Anwendungen eine Zuverlässigkeit des Gesamtsystems ein wesentlicher Faktor. Die Systemzuverlässigkeit des Gesamtsystems kann insbesondere von der Lebensdauer einzelner Systemkomponenten oder Baugruppen bzw. den zugrunde liegenden elektronischen Bauelementen stark beeinflusst werden, wobei als Lebensdauer einer Systemkomponenten bzw. eines elektronischen Bauelements üblicherweise eine Zeit bezeichnet wird, in welcher diese ohne Austausch oder komplettem Versagen genutzt werden kann.

Um die Systemzuverlässigkeit bzw. eine funktionale Sicherheit eines Systems zu steigern, werden üblicherweise kritische Systemkomponenten bzw. Baugruppen redundant aufgebaut. D.h. eine funktional gleiche oder vergleichbare Komponente ist zusätzlich zur jeweiligen Systemkomponente vorhanden und kann bei Ausfall der jeweiligen Systemkomponente deren Aufgaben bzw. Funktion übernehmen. Das Gesamtsystem ist in diesem Fall zwar noch funktionsfähig, aber ein weiterer Fehler wie z.B. eine Störung oder ein Ausfall der redundanten Komponente würde einen sofortigen Systemausfall bzw. eine Betriebsstörung des Gesamtsystems bedeuten. Daher wird beispielsweise ein Gesamtsystem bei Ausfall einer Systemkomponente bzw. bei Verwendung der zugehörigen, redundanten Komponenten meist rasch in einen sicheren Zustand gebracht - üblicherweise bis zum Austausch der ausgefallenen Systemkomponente. Dies verursacht häufig eine reduzierte Einsatzfähigkeit des Gesamtsystems oder Stehzeiten, welche meist mit zusätzlichen Kosten verbunden sind.

Um Stehzeiten und damit verbundene, zusätzliche Kosten zu reduzieren, werden beispielsweise in der Fertigungsindustrie, bei Produktionsanlagen, bei der Fahrzeug- und/oder Flugzeugwartung, etc. Methoden der so genannten vorausschauenden oder prädiktiven Wartung eingesetzt. Dabei werden die Funktion und Funktionstüchtigkeit des jeweiligen Gesamtsystems oder einzelner Systemkomponenten (z.B. Maschinen, Motoren, Triebwerk eines Flugzeugs, etc.) anhand von Daten und Informationen, welche mittels Sensoren und/oder Aufzeichnungen von Ereignissen (so genannter Logs) während des Betriebs ermittelt werden, analysiert und daraus Vorhersagen über mögliche Fehlerzustände und/oder Ausfälle der jeweiligen Systemkomponente oder des Gesamtsystems abgeleitet. Gegebenenfalls können dann entsprechende Alarme ausgelöst und rechtzeitig - d.h. vor Ausfall der jeweiligen Systemkomponente bzw. des Gesamtsystems Gegenmaßnahmen gesetzt werden - wie z.B. eine rechtzeitige Wartung und/oder ein rechtzeitiger Austausch der betroffenen Komponente. Methoden der prädiktiven Wartung werden beispielsweise bereits seit geraumer Zeit im Bereich der Flug- und Raumfahrtstechnik z.B. zur Optimierung der Triebwerkswartung bzw. der dafür nötigen Logistik eingesetzt. Dabei werden z.B. aus einer Vielzahl an vorhandenen Sensordaten aus den Triebwerken Informationen abgeleitet, durch welche die Wartung unterstützt und optimiert werden kann.

Heutzutage werden bei vielen Anwendungen, insbesondere auch bei sicherheitskritischen Anwendungen, in Gesamtsystemen (z.B. in Geräten der Medizintechnik, der Unterhaltungselektronik, im Haushalt, etc. und/oder in Anlagen, in Fahrzeugen, in Flugzeugen, etc.) so genannte eingebettete Systeme eingesetzt. Ein eingebettetes System ist eine elektronische Systemkomponente (z.B. Rechner oder Computer), welche in einen technischen Kontext eingebunden ist und dabei z.B. Überwachungs-, Steuerungs- und/oder Regelungsfunktionen übernimmt oder z.B. für Signalverarbeitung zuständig ist. Oft werden eingebettete Systeme speziell an die jeweilige Aufgabe angepasst und müssen nicht selten Echtzeitanforderungen genügen.

In eingebetteten Systemen spielen elektronische Bauelemente, die als integrierte Schaltungen, insbesondere so genannte anwendungsspezifische, integrierte Schaltungen oder ASICs und/oder so genannte Field Programmable Gate Arrays oder FPGAs, ausgeführt sind, eine zentrale Rolle. Eine Fehlfunktion bzw. ein Ausfall einer integrierten Schaltung führt in vielen Fällen bzw. nahezu fast immer zu einer Fehlfunktion und in der Folge zu einem Ausfall des gesamten Systems und verursacht damit zumindest Stehzeiten. Um den Stehzeiten zu begegnen bzw. um derartigen Ausfällen und damit verbundenen Kosten vorzubeugen, werden insbesondere kritische Komponenten, welche häufig als integrierte Schaltungen wie z.B. ASICs oder FPGAs, ausgeführt sind, in eher pessimistischen - d.h. eher kurz gewählten - Wartungsintervallen ausgetauscht. Diese Wartungsintervalle werden sehr häufig von den als integrierte Schaltungen ausgeführten, elektronischen Bauelementen bestimmt, bei welchen es insbesondere aufgrund von Alterung zu Fehlfunktionen und/oder Fehlerzuständen bzw. Ausfällen kommen kann.

Integrierte Schaltungen sind üblicherweise elektronische Schaltungen, welche auf einem dünnen, meist einige Millimeter großen Plättchen (Chip oder Die) aus Halbleiter-Material (z.B. Silizium) aufgebracht werden und zum Schutz und zur einfacheren Kontaktierung in ein Chipgehäuse eingekapselt sind. Die integrierte Schaltung besteht typischerweise aus einer Kombination von zahlreichen elektrisch verbundenen, elektronischen Halbleiterbauelementen (z.B. Transistoren, Dioden und/oder weiteren aktiven und/oder passiven Bauelementen). Im Laufe der Zeit kommt es z.B. durch physikalische und chemische Effekte zu einer Verschlechterung des HalbleiterMaterials und damit zu negativen Effekten in Bezug auf die Funktionalität vor allem der Transistoren der integrierten Schaltung. Dadurch werden insbesondere Laufzeiten von Signalen in der integrierten Schaltung verlangsamt und in der Folge deren Funktionsweise negativ beeinflusst. D.h. mit steigendem Alter bzw. mit der Dauer des Einsatzes einer integrierten Schaltung wird eine Signalübertragung verzögert, die Geschwindigkeit der integrierten Schaltung sinkt und es können dadurch Fehlfunktionen und Fehlerzustände bis zu Ausfällen des Chips auftreten. Die integrierte Schaltung hat damit ihre Lebensdauer erreicht und muss ausgetauscht werden.

Zur Ermittlung von Wartungsintervallen bei Systemen mit integrierten Schaltungen kann daher die Lebensdauer des jeweiligen elektronischen Bauelements bzw. der jeweiligen integrierten Schaltung (ASIC, FPGA) herangezogen werden. Um diese zu ermitteln, muss z.B. auf Angaben des jeweiligen Herstellers der integrierten Schaltung zurückgegriffen werden. Dabei wird vom Hersteller unter bestimmten Rahmenbedingungen (z.B. Temperaturbereich für den Betrieb, max. Spannung, etc.) eine maximale Ausfallsrate garantiert. Aus einer Gesamtheit der Herstellerangaben für die jeweiligen einzelnen elektronischen Bauelemente bzw. integrierten Schaltungen des Gesamtsystems kann dann eine Lebensdauer und in der Folge ein Wartungsintervall für das Gesamtsystem abgeleitet werden.

Ein Nachteil dieser Vorgehensweise ist allerdings, dass die Herstellerdaten wie z.B. die maximale Ausfallsrate, etc. für eine integrierte Schaltung üblicherweise auf Durchschnitts- oder Mittelwerten von z.B. Zuverlässigkeitstests und/oder Stresstests bei z.B. erhöhter Temperatur und/oder Spannung, etc. basieren. Es können daher keine konkreten Annahmen in Bezug auf die jeweils verwendeten integrierten Schaltungen im Gesamtsystem während des Betriebs gemacht werden. Eine integrierte Schaltung kann z.B. aufgrund ihrer Verwendung bzw. Einsatzbereichs während des Betriebs eine langsamere oder raschere Alterung und damit eine größer oder geringere Zuverlässigkeit bzw. eine längere oder kürzere Lebensdauer als angegeben aufweisen. Dies kann einerseits insbesondere bei kritischen Komponenten z.B. zu relativ kurzen Wartungsintervallen und/oder einem gegebenenfalls nicht notwendigen bzw. verfrühten Austausch des elektronischen Bauelements und damit zu zusätzlichen Kosten führen. Andererseits können trotz kurz gewählter Wartungsintervalle Fehlerzustände und/oder Ausfälle von Komponenten/elektronischen Bauelementen auftreten und zu Stehzeiten und Kosten führen. Daher wäre es hilfreich auch bei Systemen, welche als integrierte Schaltungen ausgeführte, elektronische Bauelemente wie z.B. ASICs und/oder FPGAs aufweisen, eine vorausschauende oder prädiktive Wartung einzusetzen, um Fehlverhalten/-funktionen, Fehlerzustände und Ausfälle von elektronischen Bauelementen, insbesondere aufgrund der Alterung, frühzeitig zu erkennen.

Aus der Schrift S. Mitra und M. Agarwal; "Circuit failure prediction to overcome scaled CMOS reliability challenges"; 2007 IEEE International Test Conference, p. 1-3, 2007*.* ist beispielsweise einen Methode zur Vorhersage von Ausfällen integrierter Schaltungen, insbesondere auf Basis von CMOS-Technologie bekannt. Dabei werden an verschiedenen Positionen im Halbleiter-Material bzw. im Chip einer integrierten Schaltung eine große Anzahl verschiedener Sensoren angebracht. Von diesen Sensoren werden Informationen über verschiedene Systemparameter wie z.B. Temperatur, Spannung, Verzögerung von Ringoszillatoren, komplexe, zeitliche Zusammenhänge logischer Signale, etc. gesammelt. Die von den Sensoren gesammelten Informationen können dann on-chip oder off-chip ausgewertet werden, um Auffälligkeiten zu identifizieren und damit auftretende Fehlfunktionen vorherzusagen. Bei dieser Methode bedarf es allerdings aufgrund der Vielzahl an Informationen einer relativen und gegebenenfalls zeitaufwendigen und kostenintensive Auswertung.

### Darstellung der Erfindung

Der Erfindung liegt daher die Aufgabe zugrunde, ein Verfahren zur prädiktiven Wartung von elektronischen Bauelementen bzw. von integrierten Schaltungen sowie ein zugehöriges System zur Durchführung des Verfahrens anzugeben, durch welche auf einfache und rasche Weise und mit geringem Aufwand Fehlfunktionen und/oder Fehlerzustände elektronischer Bauelemente bzw. integrierter Schaltungen, insbesondere aufgrund von Alterung, frühzeitig erkannt werden können.

Diese Aufgabe wird durch ein Verfahren der eingangs genannten Art sowie durch ein zugehöriges System zur Durchführung des erfindungsgemäßen Verfahrens mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs erwähnten Art, bei welchem im elektronischen Bauelement eine zentrale Überwachungseinheit angebracht wird. Von dieser zentralen Überwachungseinheit werden die aktuell von den Sensoren im elektronischen Bauelement an der zumindest einen Position ermittelten Werte der Systemparameter wie z.B. Spannung und Temperatur sowie die aktuell ermittelte Signallaufzeit an der zumindest einen Position abgefragt. Anhand der aktuell ermittelten Werte der Systemparameter wird von der zentralen Überwachungseinheit ein jeweils gültiger Grenzwert für die Signallaufzeit an der zumindest einen Position ermittelt. Der jeweils gültige Grenzwert für die Signallaufzeit wird mit dem aktuell ermittelten Wert der Signallaufzeit an der zumindest einen Position verglichen. Bei Überschreiten des jeweils gültigen Grenzwerts für die Signallaufzeit durch den aktuell ermittelten Wert der Signallaufzeit an der zumindest einen Position wird von der zentralen Überwachungseinheit ein Meldung an eine übergeordnete Ebene gesendet.

Der Hauptaspekt des erfindungsgemäßen Verfahrens besteht darin, dass rasch, einfach und mit relativ geringem Aufwand frühzeitig erkannt werden kann, dass in naher Zukunft in einem elektronischen Bauelement eine Fehlfunktion und/oder ein Fehlerzustand auftreten wird. Durch das erfindungsgemäße Verfahren können nicht nur Kosten gespart, sondern auch Wartungsintervalle besser und/oder dynamisch und bedarfsorientiert gestaltet und Stehzeiten reduziert bzw. teilweise vermieden werden. Insbesondere kann anhand des jeweils ermittelten, gültigen Grenzwerts für die Signallaufzeit von der zentralen Überwachungseinheit sehr einfach und rasch eine signifikante Verlangsamung der Signallaufzeit festgestellt werden. In naher Zukunft auftretende Fehlfunktionen und Fehlerzustände in elektronischen Bauelementen bzw. integrierten Schaltungen, welche aufgrund von Alterung auftreten würden, werden damit frühzeitig erkannt und können an eine übergeordnete Ebene gemeldet werden. Eine derartige übergeordnete Ebene kann beispielsweise ein Gesamtsystem, in welches das elektronische Bauelement eingebaut ist, oder eine zentrale Kontrolleinheit (z.B. für mehrere Gesamtsysteme) sein. Durch die entsprechende Meldung an die übergeordnete Ebene kann beispielsweise rechtzeitig eine Wartung eines Gesamtsystems bzw. einen Austausch der betroffenen Systemkomponente, in welchem das elektronische Bauelement bzw. die integrierte Schaltung im Einsatz ist, oder des elektronischen Bauelements selbst veranlasst werden, ohne dass es z.B. zu zusätzlichen Stehzeiten kommt.

Mit Hilfe der zentralen Überwachungseinheit, von welcher Systemparameter- und Signallaufzeitwerte von Sensoren an unterschiedlichen Positionen des elektronischen Bauelements abgefragt werden, können Daten und Informationen aus verschiedenen Teile des elektronischen Bauelements bzw. der integrierten Schaltung ausgewertet werden. Durch diese gemeinsame Auswertung von Information und Daten, welche an verschiedenen Positionen des elektronischen Bauelements ermittelt wurden, können gegebenenfalls Effekte sichtbar gemacht werden, welche bei einer punktuellen bzw. nur positionsspezifischen Auswertung unentdeckt bleiben würden.

Es ist vorteilhaft, wenn die im elektronischen Bauelement an zumindest einer Position angebrachten Sensoren in zumindest einem Überwachungselement positionsspezifisch zusammengefasst werden. Durch das Überwachungselement werden die Sensoren an einer Position des elektronischen Bauelements bzw. die von den Sensoren an dieser Position gelieferten Werte der Systemparameter und der Signallaufzeit gebündelt und damit deren Weiterleitung an die zentrale Überwachungseinheit vereinfacht. Vor allem bei größeren und komplexen, integrierten Schaltungen, welche an einer Vielzahl von Positionen Sensoren zum Ermitteln von Systemparametern und der Laufzeit aufweisen können, kann durch ein Zusammenfassen der Sensoren an den jeweiligen Positionen des elektronischen Bauelements zu Überwachungselementen die Abfrage der aktuellen Werte der Systemparameter und der Signallaufzeit für die jeweiligen Position für die zentrale Überwachungseinheit erheblich vereinfacht werden. Weiterhin kann wesentlich einfacher die jeweilige Position, von welcher diese Werte stammen, von der zentralen Überwachungseinheit erkannt bzw. bestimmt werden.

Es ist weiterhin günstig, wenn eine Ermittlung des jeweils gültigen Grenzwerts für die Signallaufzeit an der zumindest einen Position auf Basis der aktuell ermittelten Werte der Systemparameter an dieser zumindest einen Position derart durchgeführt wird, dass vom jeweils ermittelten, gültigen Grenzwert ein kritischer Wert für die Signallaufzeit an der zumindest einen Position nicht überschritten wird. Der jeweils ermittelte, gültige Grenzwert liegt idealerweise eine vorgegebene Toleranz oder ein vorgebbares Schutzintervall unterhalb des kritischen Werts für die Signallaufzeit. Dabei ist der kritische Wert für die Signallaufzeit vom jeweiligen Einsatz bzw. von der jeweiligen Verwendung des elektronischen Bauelements abhängig. Durch den kritischen Wert wird für die jeweilige Anwendung eine Signallaufzeit angegeben, ab welcher es aufgrund von altersbedingten Signalverzögerungen zu Fehlfunktionen, Fehlerzuständen und/oder Ausfällen kommen wird und bei welcher das elektronische Bauelement ausgetauscht werden muss. Da der jeweils ermittelte, gültige Grenzwert für die Signallaufzeit noch unterhalb des kritischen Werts liegt, kann beispielsweise das elektronische Bauelement bzw. die integrierte Schaltung rechtzeitig - d.h. noch bevor altersbedingten Fehlfunktionen und/oder Fehlerzuständen beim elektronischen, integrierten Bauelement auftreten - ausgetauscht werden.

Bei einer vorteilhaften Ausgestaltung des erfindungsgemäßen Verfahrens werden während des Betriebs des elektronischen Bauelements bzw. des übergeordneten Gesamtsystems die aktuell von den Sensoren an der zumindest einen Position ermittelten Werte der Systemparameter und der Signallaufzeit laufend von der zentralen Überwachungseinheit abgefragt. Damit können beispielsweise Verlangsamungen von Signallaufzeiten sofort erkannt und in kürzester Zeit entsprechend reagiert werden. Eine laufende Datenabfrage und -auswertung durch die zentrale Überwachungseinheit ist insbesondere bei sicherheitsrelevanten Anwendungen und/oder Einsatzbereichen des elektronischen Bauelements mit hohen Belastungen durch z.B. Temperatur und/oder Spannung, welche gegebenenfalls zu einer rascheren Alterung des Chips führen können, sinnvoll.

Alternativ können in vorteilhafter Weise die von den Sensoren an der zumindest einen Position ermittelten Werte der Systemparameter und der Signallaufzeit von der zentralen Überwachungseinheit während vorgegebener, periodischer Selbsttestphasen während des Betriebs abgefragt und ausgewertet werden. Damit kann beispielsweise bei elektronischen Bauelementen mit einer relativ hohen Lebensdauer oder bei einem Einsatz von elektronischen Bauelementen, welchen der Chip geringeren Belastungen z.B. durch Temperatur und/oder Spannung ausgesetzt ist, der Aufwand der Datenauswertung in der zentralen Überwachungseinheit reduziert werden.

Es ist weiterhin günstig, wenn für die Ermittlung der Systemparameter, insbesondere für die Ermittlung von Temperatur und Spannung, sowie der Signallaufzeit an der zumindest einen Position bereits vorhandene Sensoren genutzten, welche für eine Verlustleistungsminimierung des elektronischen Bauelements eingesetzt werden. Bei integrierten Schaltungen, insbesondere bei anwendungsspezifischen, integrierten Schaltungen bzw. ASICs, werden heutzutage bereits häufig Spannung, Temperatur und Prozess mit Hilfe von so genannten Vernier Delay Lines erfasst und daraus eine Signalverzögerung abgeleitet. Mit Hilfe dieser Informationen wird eine Regelung der Versorgungsspannung bzw. eines so genanntes Dynamic Voltage Scaling (DVS) - d.h. einen dynamische Spannungsanpassung zur Verlustleistungsminimierung durchgeführt. Dabei wird eine Versorgungsspannung für die integrierte Schaltung derart geregelt, dass eine Signalverzögerung einen definierten Wert, bei welchen alle Verzögerungen im Chip noch eingehalten werden, nicht überschreitet. Zur Informationsgewinnen für die dynamische Spannungsanpassung bzw. das DVS sind zur Messung von Temperatur, Spannung und Signallaufzeit üblicherweise an mehreren Positionen im Halbleiter-Material des elektronischen Bauelement bzw. der integrierten Schaltung entsprechende Sensoren angebracht. Diese bereits vorhandenen Sensoren können idealerweise zumindest teilweise für die Ermittlung der aktuellen Werte der Systemparameter, insbesondere Temperatur und Spannung, sowie der Signallaufzeit genutzt werden.

Es ist weiterhin vorteilhaft, wenn neben der Signallaufzeit als Systemparameter Temperatur und Spannung an der zumindest einen Position des elektronischen Bauelements ermittelt werden. Die aktuell ermittelten Werte von Temperatur und Spannung der jeweiligen Position werden von der zentralen Überwachungseinheit als Eingangswerte für die Ermittlung des jeweils gültigen Grenzwerts für die Signallaufzeit der jeweiligen Position verwendet. Es wird damit mit einem relativen geringen Aufwand bei der Datenabfrage und -auswertung durch die zentrale Überwachungseinheit auf die Alterung der elektronischen Bauelements geschlossen. Als Parameter werden dazu nur jeweils aktuelle Werte von Temperatur und Spannung an einer Position des elektronischen Bauelements sowie die Signallaufzeit an dieser Position verwendet.

Die Lösung der Aufgabe erfolgt weiterhin durch ein System zur Durchführung des erfindungsgemäßen Verfahrens zur prädiktiven Wartung von elektronischen Bauelementen bzw. integrierten Schaltungen, insbesondere von ASICs oder FPGAs. Das erfindungsgemäße System umfasst dabei zumindest Sensoren zum Ermitteln aktueller Werte von Systemparametern und einer Signallaufzeit an zumindest einer Position des elektronischen Bauelements. Dabei sind die Sensoren im elektronischen Bauelemente - z.B. im Halbleiter-Material des elektronischen Bauelements - angebracht. Weiterhin umfasst das System eine zentrale Überwachungseinheit, welche ebenfalls im elektronischen Bauelement angebracht ist. Diese zentrale Überwachungseinheit ist dazu eingerichtet, die aktuell an der zumindest einen Position des elektronischen Bauelements ermittelten Werte der Systemparameter und der Signallaufzeit abzufragen, anhand der aktuell ermittelten Werte der Systemparameter einen jeweils gültigen Grenzwert für die Signallaufzeit an der zumindest einen Position zu ermitteln und den jeweils gültigen Grenzwert mit dem aktuell ermittelten Wert der Signallaufzeit an der zumindest einen Position zu vergleichen.

Idealerweise ist die zentrale Überwachungseinheit auch dazu eingerichtet, bei Überschreiten des jeweils gültigen Grenzwerts durch den aktuell ermittelte Wert der Signallaufzeit an der zumindest einen Position Meldungen an eine übergeordnete Ebene zu senden.

Durch das erfindungsgemäße System werden mit relativ geringem Aufwand und frühzeitig in naher Zukunft auftretende Fehlfunktionen und/oder Fehlzustände in einem elektronischen Bauelement bzw. in einer integrierten Schaltung erkannt. Insbesondere ist von der zentralen Überwachungseinheit durch den jeweils ermittelten, gültigen Grenzwerts für die Signallaufzeit sehr einfach und rasch eine signifikante Verlangsamung der Signallaufzeit feststellbar. In naher Zukunft zu erwartende Fehlzustände oder Ausfälle von elektronischen Bauelementen aufgrund von Alterung werden damit frühzeitig erkannt und können von der zentralen Überwachungseinheit an eine übergeordnete Ebene wie z.B. das Gesamtsystem, in welche das elektronische Bauelement eingesetzt ist, oder eine zentrale Kontrolleinheit (z.B. für mehrere Gesamtsysteme) gemeldet werden. Damit können nicht nur Kosten gespart, sondern aus Bauelemente und/oder Systemkomponenten rechtzeitig ausgetauscht, Stehzeiten reduziert bzw. teilweise vermieden und Wartungsintervalle dynamisch und bedarfsorientiert gestaltet werden.

Durch den Einsatz einer zentralen Überwachungseinheit beim erfindungsgemäßen System, von welcher Systemparameter- und Signallaufzeitwerte von Sensoren an unterschiedlichen Positionen des elektronischen Bauelements abgefragt werden, können Daten und Informationen aus verschiedenen Teilen des elektronischen Bauelements gemeinsam ausgewertet werden. Dadurch können gegebenenfalls Effekte sichtbar gemacht werden, welche bei einer punktuellen bzw. nur positionsspezifischen Auswertung unentdeckt bleiben würden.

Bei einer bevorzugten Fortbildung des erfindungsgemäßen Systems ist zumindest ein Überwachungselement vorgesehen, in welchem die im elektronischen Bauelement an der zumindest einen Position angebrachten Sensoren zusammengefasst sind. Durch das zumindest eine Überwachungselement werden die Sensoren an der zumindest eine Position des elektronischen Bauelements zusammengefasst und die von den Sensoren ermittelten Werte der Systemparameter und der Signallaufzeit gebündelt. Insbesondere bei Sensoren an mehreren Positionen des elektronischen Bauelements kann ein positionsspezifisches Zusammenfassen der Sensoren an den jeweiligen Positionen zu Überwachungselementen zu einer wesentlichen Vereinfachung der Datenabfrage durch die zentrale Überwachungseinheit führen. Weiterhin kann die jeweilige Position, von welcher die Daten bzw. die aktuellen Werte der Systemparameter und der Signallaufzeit stammen, von der zentralen Überwachungseinheit wesentlich einfacher bestimmt werden.

Idealerweise sind als Sensoren zum Ermitteln aktueller Werte von Systemparametern an der zumindest einen Position des elektronischen Bauelements zumindest ein Sensor zum Bestimmen aktueller Temperaturwerte und ein Sensor zum Bestimmen aktueller Spannungswerte eingesetzt. Dabei kann beispielsweise - sofern im elektronischen Bauelement bzw. der integrierten Schaltung vorhanden - zumindest teilweise eine Infrastruktur des so genanntes Dynamic Voltage Scaling (DVS) bzw. der dynamische Spannungsanpassung zur Verlustleistungsminimierung genutzt werden. Dadurch wird vor allem eine Entwicklung und Realisierung eines elektronischen Bauelements, welche das erfindungsgemäße System zur prädiktiven Wartung umfasst, erheblich vereinfacht.

Eine spezielle Ausführungsvariante des erfindungsgemäßen Systems sieht vor, dass die zentrale Überwachungseinheit als eigenständige Einheit des elektronischen Bauelements ausgeführt ist. D.h. die zentrale Überwachungseinheit ist als eigenständiges Modul im elektronischen Bauelement bzw. in der integrierten Schaltung realisiert. Sie kann damit weitgehend unabhängig von den anderen Einheiten (z.B. CPU, Kontroller, etc.) des elektronischen Bauelements die Abfrage und Auswertung der Systemparameter- und Signallaufzeitwerten vornehmen.

Alternativ kann die zentrale Überwachungseinheit in eine Systemeinheit wie z.B. eine CPU oder Prozessoreinheit, etc. des elektronischen Bauelements integriert sein. Die Abfrage und Auswertung der Systemparameter und der Signallaufzeit von den Sensoren bzw. den Überwachungselementen wird dann durch die Systemeinheit abgearbeitet. Die zentrale Überwachungseinheit bildet damit eine funktionale Einheit der Systemeinheit.

### Kurzbeschreibung der Zeichnung

Die Erfindung wird nachfolgend in beispielhafter Weise anhand der beigefügten Figuren erläutert. Dabei zeigen:
- Figur 1: schematisch einen beispielhaften Ablauf des erfindungsgemäßen Verfahren zur prädiktiven Wartung eines elektronischen Bauelements mit dem zugehörigen erfindungsgemäßem System
- Figur 2: schematisch ein beispielshafte Ausführungsvariante des erfindungsgemäßen Systems zur prädiktiven Wartung eines elektronischen Bauelements

### Ausführung der Erfindung

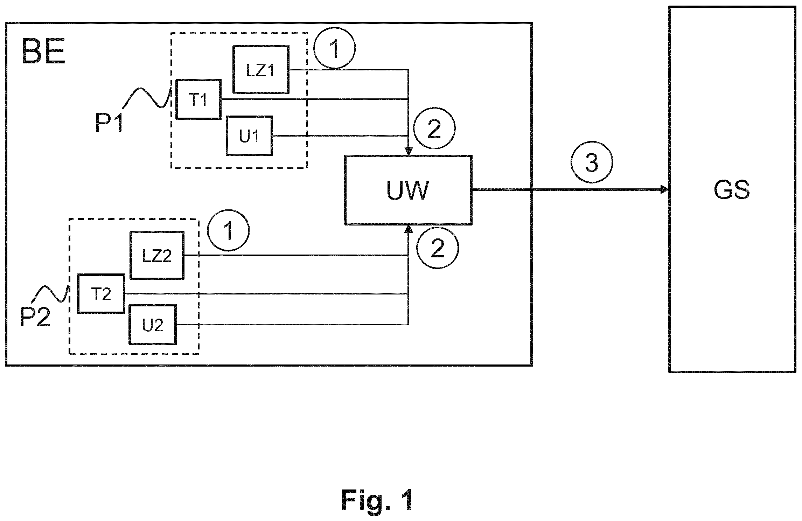

Figur 1 zeigt in schematischer Weise ein beispielhaftes elektronisches Bauelement BE. Das Bauelement BE ist als integrierte Schaltung - beispielsweise als anwendungsspezifische, integrierte Schaltung oder ASIC - ausgeführt. Alternativ kann das elektronische Bauelement BE aber auch als so genanntes Field Programmable Gate Array oder FPGA ausgeführt sein. Das elektronische Bauelement BE kann beispielsweise eine Systemkomponente oder Teil einer Systemkomponente in einem Gesamtsystem GS sein, welches als übergeordnete Ebene fungiert und beispielsweise als eingebettetes System GS ausgestaltet ist.

Das in Figur 1 beispielhaft dargestellte, elektronische Bauelement BE weist - neben anderen der Einfachheit halber in Figur 1 nicht dargestellten Einheiten - an zwei beispielhaften Position P1, P2 mehrere Sensoren T1, U1, LZ1, T2, U2, LZ2 auf, welche z.B. im Halbleiter-Material des elektronischen Bauelements BE bzw. der integrierten Schaltung angebracht sind. Von den Sensoren T1, U1, LZ1, T2, U2, LZ2 werden aktuelle Werte von Systemparametern wie z.B. Temperatur und Spannung sowie einer Signallaufzeit an der jeweiligen Position P1, P2 ermittelt. D.h. von ersten Sensoren T1, U1, LZ1 werden beispielsweise an einer ersten Position P1 des elektronischen Bauelements BE von einem Sensor T1 aktuelle Temperaturwerte, von einem Sensor U1 aktuelle Spannungswerte und von Sensor LZ1 aktuelle Werte für die Signallaufzeit bestimmt. An einer zweiten Position P2 des elektronischen Bauelements BE werden z.B. von zweiten Sensoren T2, U2, LZ2 ebenfalls aktuelle Werte von Temperatur, Spannung und die Signallaufzeit für die zweite Position P2 ermittelt. Dazu können die zweiten Sensoren T2, U2, LZ2 ebenfalls einen Sensor T2 zum Bestimmen aktueller Temperaturwerte, einen Sensor U2 zum Bestimmen aktueller Spannungswerte sowie einen Sensor LZ2 aufweisen, mit welchem aktuelle Werte der Signallaufzeit an der zweiten Position P2 ermittelbar sind. Die Sensoren T1, U1, LZ1, T2, U2, LZ2 können z.B. zumindest Teil einer bereits vorhandenen Infrastruktur für eine dynamische Spannungsanpassung zur Verlustleistungsminimierung bzw. ein so genanntes Dynamic Voltage Scaling (DVS) sein.

Weiterhin weist das elektronische Bauelement BE einen zentrale Überwachungseinheit UW auf, von welcher gemeinsam mit den im elektronischen Bauelement BE angebrachten Sensoren T1, U1, LZ1, T2, U2, LZ2 das erfindungsgemäße System für eine prädiktive Wartung des elektronischen Bauelements BE gebildet wird. Die zentrale Überwachungseinheit UW kann dabei als eigenständige Einheit bzw. als eigenständiges Modul im elektronischen Bauelement BE realisiert sein. Alternativ kann die zentrale Überwachungseinheit UW in eine - in Figur 1 nicht dargestellte - Systemeinheit des elektronischen Bauelements BE wie z.B. ein CPU, einen Prozessor, etc. integriert sein und von dieser im Gesamtsystem GS als funktionale Einheit ausgeführt werden.

Die zentrale Überwachungseinheit UW ist dazu eingerichtet, das erfindungsgemäße Verfahren zur prädiktiven Wartung auszuführen. Dabei werden in einem ersten Verfahrensschritt 1 von den Sensoren T1, U1, LZ1, T2, U2, LZ2 während des Betriebs des elektronischen Bauelements BE bzw. des Gesamtsystems GS an der jeweiligen Position P1, P2 die aktuellen Werte der Systemparameter, insbesondere von Temperatur und Spannung, sowie aktuelle Werte einer Signallaufzeit ermittelt. Die aktuellen Werte der Systemparameter sowie der Signallaufzeit der jeweiligen Position P1, P2 werden von der zentralen Überwachungseinheit UW abgefragt.

Eine Abfrage der aktuellen Werte der Systemparameter und der Signallaufzeit der verschiedenen Positionen P1, P2 durch die zentrale Überwachungseinheit UW kann beispielsweise laufend während des Betriebs des elektronischen Bauelements BE durchgeführt werden. Alternativ können die von den Sensoren T1, U1, LZ1, T2, U2, LZ2 an den jeweiligen Positionen P1, P2 aktuelle ermittelten Werte der Systemparameter und der Signallaufzeit auch während vorgegebener Selbsttestphasen abgefragt werden, wobei die Selbsttestphasen periodisch wiederholt bzw. durchlaufen werden.

In einem zweiten Verfahrensschritt 2 wird von der zentralen Überwachungseinheit UW anhand der an der jeweiligen Position P1, P2 ermittelten, aktuellen Werte der Systemparameter, insbesondere anhand der aktuellen Temperatur- und Spannungswerte, ein jeweils gültiger Grenzwert für die Signallaufzeit an der jeweiligen Position P1, P2 ermittelt. Die Ermittlung des jeweils ermittelten, gültigen Grenzwerts für die jeweilige Signallaufzeit an der jeweiligen Position P1, P2 wird dabei derart durchgeführt, dass vom jeweils ermittelten, gültigen Grenzwert ein jeweiliger, kritischer Wert für die Signallaufzeit an der jeweiligen Position P1, P2 nicht überschritten wird. D.h. der jeweils gültige Grenzwert liegt ein z.B. vorgebbares Toleranz- oder Schutzintervall unterhalb des jeweiligen kritischen Werts für die Signallaufzeit an der jeweiligen Position P1, P2, wobei bei Erreichen des kritischen Werts für die Signallaufzeit an einer Position P1, P2 des elektronischen Bauelements BE das elektronisches Bauelement BE z.B. aufgrund von auftretenden Fehlerzuständen ausgetauscht werden sollte bzw. muss.

Bei dem in Figur 1 beispielhaft dargestellten, elektronischen Bauelement BE wird von der zentralen Überwachungseinheit UW im zweiten Verfahrensschritt 2 beispielsweise auf Basis der von den ersten Sensoren T1, U1 ermittelten, aktuellen Werten von Temperatur und Spannung ein erster jeweils gültiger Grenzwert für die Signallaufzeit an der erste Position P1 ermittelt. Weiterhin wird von der zentralen Überwachungseinheit UW für die zweite Position P2 auf Basis der von den zweiten Sensoren T2, U2 ein zweiter jeweils gültiger Grenzwert für die Signallaufzeit an der zweiten Position P2 bestimmt.

Dann wird der jeweils gültige Grenzwert für die Signallaufzeit an der jeweiligen Position P1, P2 von der zentralen Überwachungseinheit UW mit dem aktuell ermittelten Wert der Signallaufzeit an der jeweiligen Position P1, P2 verglichen. Im Zuge der Alterung des elektronischen Bauelements BE kann sich die Signallaufzeit an verschiedenen Positionen P1, P2 im elektronischen Bauelement selbst bei gleichbleibenden Rahmenbedingungen (z.B. Temperatur, Spannung, Belastung, etc.) verlangsamen. Durch zentrale Überwachungseinheit UW kann dabei eine signifikante Verlangsamung der Signallaufzeit an der jeweiligen Position P1, P2 des elektronischen Bauelements BE detektieren. Das bedeutet, bei dem in Figur 1 beispielhaft dargestellten, elektronischen Bauelement BE wird von der zentralen Überwachungseinheit z.B. der erste jeweils gültige Grenzwert mit aktuell, ermittelten Werten der Signallaufzeit verglichen, welche vom Sensor LZ1 an der ersten Position P1 ermittelt wurden. Der zweite jeweils gültige Grenzwert wird dann z.B. mit aktuell, ermittelten Werten der Signallaufzeit verglichen, welche vom Sensor LZ2 an der zweiten Position P2 bestimmt wurden.

Wird beim Vergleich des jeweiligen aktuellen Werts der Signallaufzeit an der jeweiligen Position P1, P2 mit dem entsprechenden, jeweils gültigen Grenzwert festgestellt, dass von einem aktuell, ermittelten Signallaufzeitwert an zumindest einer Position P1, P2 der entsprechende, jeweils gültige Grenzwerte überschritten wird, dann wird in einem dritten Verfahrensschritt 3 von der zentralen Überwachungseinheit UW eine Meldung an die übergeordnete Ebenen - z.B. an das Gesamtsystem GS - gesendet. Alternativ kann z.B. die Meldung von der zentralen Überwachungseinheit UW an eine zentrale Kontrolleinheit gesendet werden, von welcher beispielsweise das Gesamtsystem GS oder mehrere Systeme überwacht werden. Aufgrund der Meldung kann auf der übergeordneten Systemebene GS in geeigneter Weise reagiert werden - z.B. durch Alarmmeldungen, durch Auslösen von entsprechenden Maßnahmen, etc. Es kann beispielsweise bedarfsorientiert ein Austausch des elektronischen Bauelements BE oder der entsprechenden Systemkomponente vorgenommen oder eine Wartung des Gesamtsystems GS veranlasst werden.

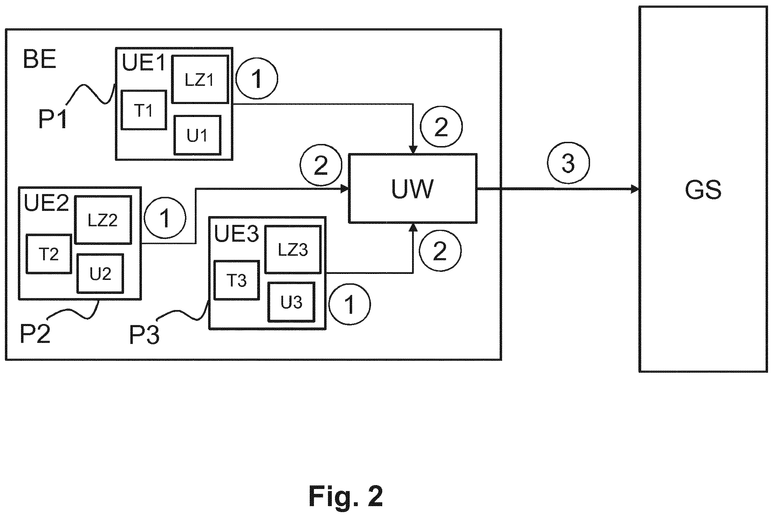

Figur 2 zeigt wieder in schematischer Weise das beispielhafte, elektronische Bauelement BE, welches das System zur prädiktiven Wartung aufweist. Dazu sind im elektronischen Bauelement BE bzw. im Halbleiter-Material des elektronischen Bauelements BE beispielsweise an mehreren - z.B. an drei Positionen P1, P2, P3 Sensoren T1, U1, LZ1, T2, U2, LZ2, T3, U3, LZ3 angebracht, von welchen aktuelle Werte der Systemparameter (z.B. Temperatur, Spannung) sowie der Signallaufzeit an der jeweiligen Position P1, P2, P3 ermittelt werden. Zur Vereinfachung des Systems bzw. der Abfrage der aktuell, von den jeweiligen Sensoren T1, U1, LZ1, T2, U2, LZ2, T3, U3, LZ3 ermittelten Werte durch die zentrale Überwachungseinheit UW sind die Sensoren T1, U1, LZ1, T2, U2, LZ2, T3, U3, LZ3 positionsspezifisch in Überwachungselementen UE1, UE2, UE3 zusammengefasst. Ein erstes Überwachungselement UE1 umfasst dabei z.B. erste Sensoren T1, U1, LZ1 zum Ermitteln der aktuellen Werte der Systemparameter bzw. von Temperatur und Spannung sowie der Signallaufzeit an der ersten Position P1. Zweite Sensoren T2, U2, LZ2 der zweiten Position P2 werden z.B. in einem zweiten Überwachungselement UE2 zusammengefasst und ein drittes Überwachungselement UE3 umfasst beispielsweise dritte Sensoren T3, U3, LZ3 an einer dritten Position P3.

Die aktuellen Werte der Systemparameter und der Signallaufzeit an der jeweiligen Position P1, P2, P3 werden wieder während des Betriebs im ersten Verfahrensschritt 1 von den jeweiligen Sensoren T1, U1, LZ1, T2, U2, LZ2, T3, U3, LZ3 ermittelt. Dann werden die aktuell ermittelten Werte der Systemparameter und der Signallaufzeit an der jeweiligen Position P1, P2, P3 vom jeweiligen Überwachungselement UE1, UE2, UE3 gebündelt und können von der zentralen Überwachungseinheit UW positionsspezifisch vom jeweiligen Überwachungselement UE1, UE2, UE3 entweder laufend oder während vorgebbarer, periodischer Selbsttestphasen des elektronischen Bauelements BE abgefragt werden.

Im zweiten Verfahrensschritt 2 wird von der zentralen Überwachungseinheit UW anhand der aktuell ermittelten Werte der Systemparameter für die jeweilige Position P1, P2, P3 ein jeweils gültiger Grenzwert für die Signallaufzeit an der jeweiligen Position P1, P2, P3 ermittelt. Der jeweils gültige Grenzwert für die Signallaufzeit an der jeweiligen Position P1, P2, P3 wird dann mit aktuell, für die jeweilige Position P1, P2, P3 ermittelten Werten der Signallaufzeit verglichen. Wird zumindest einer der jeweils gültigen Grenzwerte für die Signallaufzeit an der jeweiligen Position P1, P2, P3 vom entsprechenden aktuell ermittelten Wert der Signallaufzeit für die jeweilige Position P1, P2, P3 überschritten, so wird im dritten Verfahrensschritt 3 ein Meldung an die übergeordnete Ebene - z.B. das Gesamtsystem GS - gesendet. Es können dann wieder entsprechende Maßnahmen und Reaktionen veranlasst werden.

In einer alternativen Ausführungsform des erfindungsgemäßen Systems kann z.B. der zweite Verfahrensschritt 2 des erfindungsgemäßen Verfahrens zumindest teilweise in die Überwachungselemente UE1, UE2, UE3 verlagert werden. Das bedeutet, dass bereits lokal im jeweiligen Überwachungselement UE1, UE2, UE3 die von den jeweiligen Sensoren T1, U1, LZ1, T2, U2, LZ2, T3, U3, LZ3 ermittelten Werte der Systemparameter und der Signallaufzeit ausgewertet werden. Im ersten Überwachungselement UE1 wird z.B. anhand der aktuell ermittelten Wert der Systemparameter, insbesondere Temperatur und Spannung, der jeweils gültige Grenzwert für die Signallaufzeit an der erste Position P1 ermittelt und dann der Vergleich des jeweils gültigem Grenzwerts mit dem aktuell ermittelten Wert der Signallaufzeit an der ersten Position P1 durchgeführt. Analog wird dieser Teil des zweiten Verfahrensschritts 2 auch von den weiteren Überwachungselement UE2, UE3 für die jeweiligen, weiteren Positionen P2, P3 durchgeführt.

Die Überwachungselemente UE1, UE2, UE3 können dann von der zentralen Überwachungseinheit UW beispielsweise abgefragt werden und das jeweilige Vergleichsergebnis (z.B. "Grenzwert überschritten", "Grenzwert nicht überschritten") an die zentrale Überwachungseinheit UW weiterleiten. Stellt die zentrale Überwachungseinheit fest, dass eine Rückmeldung von zumindest einem Überwachungselemente UE1, UE2, UE3 auf "Grenzwert überschritten" lautet, so kann von der zentralen Überwachungseinheit UW im dritten Verfahrensschritt 3 eine Meldung an die übergeordnete Ebene gesendet werden

## Patentansprüche

1. Verfahren zur prädiktiven Wartung eines elektronische Bauelements (BE), welches als integrierte Schaltung, insbesondere als anwendungsspezifische, integrierte Schaltung oder als so genanntes Field Programmable Gate Array, ausgeführt ist, und wobei das elektronische Bauelement (BE) an zumindest einer Position (P1, P2) Sensoren (T1, U1, LZ1, T2, U2, LZ2) aufweist, von welchen während eines Betriebs aktuelle Werte von Systemparametern sowie einer Signallaufzeit an der zumindest einen Position (P1, P2) ermittelt werden, ***dadurch gekennzeichnet, dass*** von einer im elektronischen Bauelement (BE) angebrachten, zentralen Überwachungseinheit (UW) die aktuell von den Sensoren (T1, U1, LZ1, T2, U2, LZ2) an der zumindest einen Position (P1, P2) ermittelten Werte der Systemparameter und der Signallaufzeit abgefragt werden (1), dass anhand der aktuell ermittelten Werte der Systemparameter ein jeweils gültiger Grenzwert für die Signallaufzeit an der zumindest einen Position (P1, P2) ermittelt wird (2), und dass bei Überschreiten des jeweils gültigen Grenzwerts durch den aktuell ermittelten Wert der Signallaufzeit an der zumindest einen Position (P1, P2) eine Meldung an eine übergeordnete Ebene (GS) gesendet wird (3).

2. Verfahren nach Anspruch 1, ***dadurch gekennzeichnet, dass*** die im elektronischen Bauelement (BE) an der zumindest einen Position (P1, P2, P3) angebrachten Sensoren (T1, U1, LZ1, T2, U2, LZ2, T3, U3, LZ3) in zumindest einem Überwachungselement (UE1, UE2, UE3) zusammengefasst werden.

3. Verfahren nach einem der Ansprüche 1 bis 2, ***dadurch gekennzeichnet, dass*** eine Ermittlung des jeweils gültigen Grenzwerts für die Signallaufzeit an der zumindest einen Position (P1, P2) derart durchgeführt wird, dass vom jeweils ermittelten, gültigen Grenzwert ein kritischer Wert für die Signallaufzeit an der zumindest einen Position (P1, P2) unterschritten wird (2).

4. Verfahren nach einem der Ansprüche 1 bis 3, ***dadurch gekennzeichnet, dass*** während des Betriebs die aktuell von den Sensoren (T1, U1, LZ1, T2, U2, LZ2) an der zumindest einen Position (P1, P2) ermittelten Werte der Systemparameter und der Signallaufzeit von der zentralen Überwachungseinheit (UW) laufend oder während vorgegebener, periodischer Selbsttestphasen abgefragt werden (1).

5. Verfahren nach einem der Ansprüche 1 bis 4, ***dadurch gekennzeichnet, dass*** für die Ermittlung der Systemparameter und der Signallaufzeit an der zumindest einen Position (P1, P2) Sensoren (T1, U1, LZ1, T2, U2, LZ2) genutzt werden, welche für eine Verlustleistungsminimierung eingesetzt werden (1).

6. Verfahren nach einem der Ansprüche 1 bis 5, ***dadurch gekennzeichnet, dass*** als Systemparameter Temperatur und Spannung an der zumindest einen Position (P1, P2) des elektronischen Bauelements (BE) ermittelt werden (1).

7. System zur Durchführung eines Verfahren zur prädiktiven Wartung eines elektronische Bauelements (BE) nach einem der Ansprüche 1 bis 8, wobei das elektronische Bauelement (BE) als integrierte Schaltung, insbesondere ASIC oder FPGA ausgeführt ist, zumindest umfassend:
- Sensoren (T1, U1, LZ1, T2, U2, LZ2) zum Ermitteln aktueller Werte von Systemparametern und einer Signallaufzeit an zumindest einer Position (P1, P2) des elektronischen Bauelements (BE), ***dadurch gekennzeichnet, dass*** das System eine zentrale Überwachungseinheit (UW) umfasst, welche dazu eingerichtet ist, die aktuell von den Sensoren (T1, U1, LZ1, T2, U2, LZ2) an der zumindest einen Position (P1, P2) des elektronischen Bauelements (BE) ermittelten Werte der Systemparameter und der Signallaufzeit abzufragen, anhand der aktuell ermittelten Werte der Systemparameter einen jeweils gültigen Grenzwert für die Signallaufzeit an der zumindest einen Position (P1, P2) zu ermitteln und den jeweils gültigen Grenzwert mit dem aktuell ermittelten Wert der Signallaufzeit an der zumindest einen Position (P1, P2) zu vergleichen.

8. System nach Anspruch 7, ***dadurch gekennzeichnet, dass*** die zentrale Überwachungseinheit (UW) weiterhin dazu eingerichtet ist, bei Überschreiten des jeweils gültigen Grenzwerts durch den aktuell ermittelte Wert der Signallaufzeit an der zumindest einen Position (P1, P2) Meldungen an eine übergeordnete Ebene (GS) zu senden.

9. System nach einem der Ansprüche 7 bis 8, ***dadurch gekennzeichnet, dass*** weiterhin zumindest ein Überwachungselement (UE1, UE2, UE3) vorgesehen ist, in welchem die im elektronischen Bauelement (BE) an der zumindest einen Position (P1, P2, P3) angebrachten Sensoren (T1, U1, LZ1, T2, U2, LZ2, T3, U3, LZ3) zusammengefasst sind.

10. System nach einem der Ansprüche 7 bis 9, ***dadurch gekennzeichnet, dass*** als Sensoren (T1, U1, LZ1, T2, U2, LZ2) zum Ermitteln aktueller Werte von Systemparametern an der zumindest einen Position (P1, P2) des elektronischen Bauelements (BE) zumindest ein Sensor (T1, T2) zum Bestimmen aktueller Temperaturwerte und ein Sensor (U1, U2) zum Bestimmen aktueller Spannungswerte eingesetzt sind.

11. System nach einem der Ansprüche 7 bis 10, ***dadurch gekennzeichnet, dass*** die zentrale Überwachungseinheit (UW) als eigenständige Einheit des elektronischen Bauelements (BE) ausgeführt ist.

12. System nach einem der Ansprüche 7 bis 10, ***dadurch gekennzeichnet, dass*** die zentrale Überwachungseinheit (UW) in eine Systemeinheit des elektronischen Bauelements (BE) integriert ist.
